# EUROPÄISCHE PATENTSCHRIFT

(11) **EP 0 874 166 B1**
(45) Veröffentlichungstag und Bekanntmachung des Hinweises auf die Patenterteilung: **22.12.1999**
(21) Anmeldenummer: 98103990.2
(22) Anmeldetag: 06.03.1998
(51) Int. Cl.: F16B 13/06

(54) **Spreizdübel, insbesondere aus rostfreiem Stahl**
Dowel, in particular of stainless steel
Cheville, notamment en acier inoxydable

(30) Priorität: 23.04.1997 DE 19716926
(43) Veröffentlichungstag der Anmeldung: 28.10.1998
(73) Patentinhaber: MKT METALL-KUNSTSTOFF-TECHNIK GmbH & Co. KG., D-67685 Weilerbach (DE)
(72) Erfinder: Weustenhagen, Lore, 67686 Mackenbach (DE)
(74) Vertreter: Schneck, Herbert, Dipl.-Phys., Dr.

(56) Entgegenhaltungen:
- DE-A- 4 225 869
- DE-A- 19 522 026
- US-A- 4 983 083
- US-A- 5 176 481
- US-A- 5 490 750

## Beschreibung

Die Erfindung richtet sich auf einen Spreizdübel, insbesondere aus rostfreiem Stahl, wobei während des Aufspreizvorganges zwei Flächen, insbesondere Keil- oder Konusflächen, sich unter zunehmender Flächenpressung relativ zueinander verschieben und wobei wenigstens eine der Flächen mit einem, einer Blockierung entgegenwirkenden Überzug versehen ist.

Es ist bekannt, zum Verhindern einer solchen Blockierung, eine Nut im konusförmigen Teil des Bolzens vorzusehen und an dieser Nut ein Kunststoffteil festzulegen. Dies ist herstellungstechnisch aufwendig.

Weiterhin ist es bekannt, eine Gleitlackbeschichtung aufzubringen, was ebenfalls relativ aufwendige Herstellungsschritte erforderlich macht, insbesondere weil eine Vorbehandlung der Flächen erforderlich ist.

Hiervon ausgehend liegt der Erfindung die Aufgabe zugrunde, die sich zueinander bewegenden Kontaktflächen eines Dübels der eingangs genannten Art so auszubilden, daß eine Blockierung durch Materialfressen und Kaltverschweißung einerseits wirksam vermieden wird und andererseits das Aufbringen des Überzugs rationell und kostengünstig erfolgen kann.

Diese Aufgabe wird erfindungsgemäß dadurch gelöst, daß der Überzug in Form eines Schrumpfschlauches aufgebracht ist.

Ein derartiger Überzug läßt sich mit vergleichsweise geringem Heizaufwand leicht und schnell aufbringen und bildet im aufgebrachten Zustand eine außerordentlich gleichmäßige und haltbare Oberfläche aus. Das Aufbringen des Überzuges ist völlig unabhängig vom Herstellungsverfahren für den Konus, insbesondere bedarf es keinerlei vorbereitender Schritte im Sinne einer Oberflächenbehandlung. Sowohl die Aufbringung als auch gegebenenfalls die Entsorgung läßt sich in umweltfreundlicher Weise bewerkstelligen. Versuche haben gezeigt, daß das Kaltverschweißen und Materialfressen sehr zuverlässig unterbunden wird, und daß sehr günstige Auszugwerte erhalten werden.

Günstigerweise wird ein Schrumpfschlauch auf Polyolefinbasis oder der Basis Polyvinylidenfluorids verwendet.

Die Erfindung richtet sich auch auf ein Verfahren zum Aufbringen eines Überzuges auf Flächen von Dübeln, insbesondere aus rostfreiem Stahl, bei welchen die Gefahr einer Blockierung durch Materialfressen und Kaltverschweißen besteht, welches sich dadurch auszeichnet, daß die entsprechenden Flächen - oder auch nur eine der Flächen - durch thermisches Schrumpfen eines Schrumpfschlauch überzogen werden.

Nachfolgend wird die Erfindung anhand eines bevorzugten Ausführungsbeispiels in Verbindung mit der Zeichnung näher beschrieben. Diese zeigen:
- Fig. 1: einen Bolzenanker mit Konusbolzen
- Fig. 2: einen Längsschnitt durch den Konusbereich des Spreizdübels.

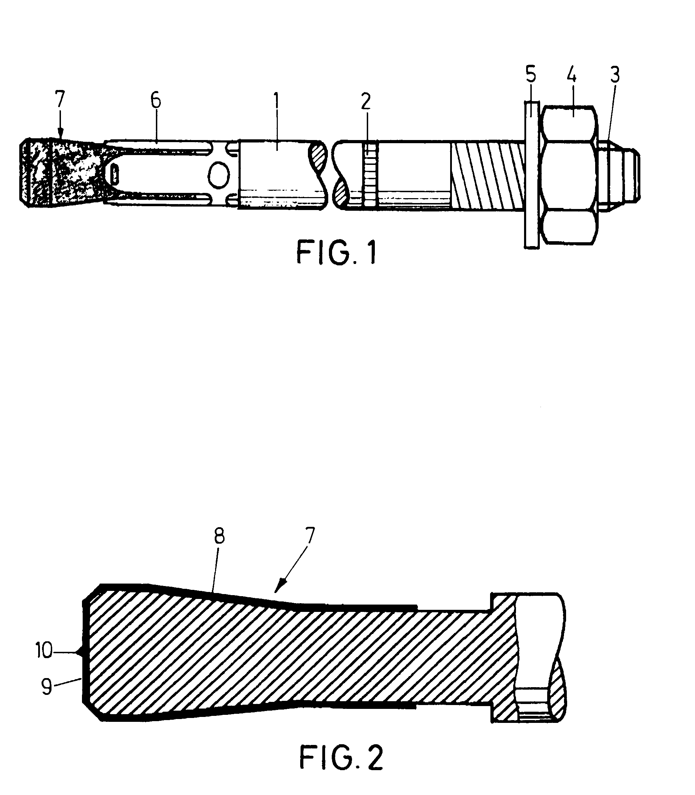

Ein in der Zeichnung dargestellter Bolzenanker weist einen Grundkörper 1 auf, der mit einer Setztiefenmarkierung 2 versehen ist. Im Bereich des beim Einsetzen äußeren Endes ist ein Gewindeabschnitt 3 ausgebildet, auf welchen eine Sechskantmutter 4 aufschraubbar ist, die auf eine Unterlegscheibe 5 einwirkt.

Im Bereich des inneren Endes ist eine Spreizhülse 6 ausgebildet, welche mit einem Konusbolzen 7 in an sich bekannter Weise derart zusammenwirkt, daß beim Anziehen der Mutter 4 die Spreizhülse 6 auf den Konusbolzen 7 aufgeschoben und in der den Anker aufnehmenden Bohrung verspreizt wird.

Erfindungsgemäß ist vorgesehen, daß der Konusbolzen 7 mit einem Schrumpfschlauch 8 überzogen ist, der die Konusflächen gleichmäßig bedeckt und sich auch über die Stirnseite 9 des Konusbolzens 7 erstreckt, wo der Schrumpfschlauch 8 unter Ausbildung einer Schweißnaht 10 abgetrennt ist.

## Patentansprüche

1. Spreizdübel, insbesondere aus rostfreiem Stahl, wobei während des Aufspreizvorganges zwei Flächen, insbesondere Keil- oder Konusflächen, sich unter zunehmender Flächenpressung relativ zueinander verschieben, und wobei wenigstens eine dieser Flächen mit einem einer Blockierung entgegenwirkenden Überzug versehen ist, **dadurch gekennzeichnet, daß** die Beschichtung in Form eines Schrumpfschlauches (8) aufgebracht ist.

2. Spreizdübel nach Anspruch 1, **dadurch gekennzeichnet, daß** der Schrumpfschlauch (8) auf Polyolefinbasis hergestellt ist.

3. Spreizdübel nach Anspruch 1, **dadurch gekennzeichnet, daß** der Schrumpfschlauch (8) auf der Basis eines Polyvinylidenfluorid hergestellt ist.

4. Verfahren zum Aufbringen eines Überzuges auf Flächen von Dübeln, insbesondere aus rostfreiem Stahl, bei welchen die Gefahr einer Blockierung durch Materialfressen und Kaltverschweißen besteht, **dadurch gekennzeichnet, daß** die entsprechenden Flächen - oder auch nur eine der Flächen- durch thermisches Schrumpfen eines Schrumpfschlauch überzogen werden.

## Claims

1. A dowel, in particular of stainless steel, two surfaces, in particular wedge or cone surfaces, becoming displaced relative to each other during the straddling process while the surface pressure increases, and at least one of these surfaces being provided with a coating which counteracts blocking, **characterized in that** the coating is applied in the form of a heat-shrinkable sleeve (8).

2. A dowel according to claim 1, **characterized in that** the heat-shrinkable sleeve (8) is produced basing on polyolefin.

3. A dowel according to claim 1, **characterized in that** the heat-shrinkable sleeve (8) is produced basing on polyvinylidene fluoride.

4. A method of applying a coating on surfaces of dowels, in particular of stainless steel, in which there is the risk of blocking by material corrosion and cold welding, **characterized in that** the corresponding surfaces - or only one of the surfaces - is coated by thermal shrinkage of a heat-shrinkable sleeve.

## Revendications

1. Cheville à expansion, en particulier en acier inoxydable, deux surfaces, en particulier des surfaces en coin ou en cône, se déplaçant l'une par rapport à l'autre en engendrant une élévation de la pression superficielle durant l'opération d'expansion, et au moins l'une de ces surfaces étant pourvue d'un revêtement s'opposant à un blocage, caractérisée en ce que l'enrobage est réalisé sous la forme d'une gaine rétrécissable (8).

2. Cheville à expansion selon la revendication 1, caractérisée en ce que la gaine rétrécissable (8) est fabriquée à base de polyoléfine.

3. Cheville à expansion selon la revendication 1, caractérisée en ce que la gaine rétrécissable (8) est fabriquée à base de fluorure de polyvinylidène.

4. Procédé d'application d'un revêtement sur des surfaces de chevilles, en particulier en acier inoxydable, qui présentent un risque de blocage par grippage et par soudage à froid, caractérisé en ce que les surfaces correspondantes - ou seulement l'une desdites surfaces - sont revêtues par rétrécissement thermique d'une gaine rétrécissable.
